# EUROPEAN PATENT APPLICATION

(11) **EP 1 512 661 A1**
(43) Date of publication of application: **09.03.2005**
(21) Application number: 04397018.5
(22) Date of filing: 06.09.2004
(51) Int. Cl.: B66F 9/07

(54) **System of several stacker cranes and method for controlling the same**

(30) Priority: 04.09.2003 FI 20031259
(71) Applicant: Fastems Oy AB, 33840 Tampere (FI)
(72) Inventor: Kantola, Juhana, 36270 Kangasala (FI); Nurminen, Matti, 33960 Pirkkala (FI); Rantalainen, Juhani, 37100 Nokia (FI); Rapila, Tero, 02600 Espoo (FI); Tikkala, Jari, 37550 Lempäälä (FI)
(74) Representative: Rönkkö, Taina Mirjam

(57) **Abstract**

A method and a system utilizing the same, comprising two or more stacker cranes (6, 13), of which each is intended to transfer at least one load (2, 3) independently, comprising a horizontally movable driving carriage (8, 15) and a lifting carriage (10, 17) arranged therein and intended for the manipulation and vertical transfer of said load. At least two stacker cranes (6, 13) are arranged to move, if necessary, to such a relative position and to perform the movements of the driving carriages (8, 15) and the lifting carriages (10, 17) in a synchronized manner, to make it possible to manipulate and transfer a load (1) resting on the support of both lifting carriages (10, 17) simultaneously.

## Description

The invention relates to a system comprising two or more stacker cranes according to the preamble of claim 1. The invention also relates to a method in the control of a stacker crane system according to the preamble of claim 9.

As is well known, for example automatic flexible manufacturing systems and automatic storage systems comprise various feeding points for feeding work pieces into the system for machining, storing or other processing. The work pieces are typically placed on various bases, trays or pallets. Typically, the system also comprises various automatically operating lifting and transfer devices which transfer work pieces from the feeding point to the system, to be processed further or to be stored on a storage rack, and back. The lifting and transfer devices include, for example, stacker cranes which manipulate different kinds of bases, trays, pallets or work pieces and which comprise suitable devices, such as transfer forks, telescopic forks, lifting mechanisms, and the like, for manipulating said pieces. These devices are normally placed in a lifting carriage which moves in the vertical frame structure of the stacker crane, driven for example by a cable drive or a chain drive. The lifting and transfer device is normally arranged above the floor level, in a driving carriage which typically moves on the support of rails.

The stacker cranes also transfer pieces to various manufacturing stations that have automatic manipulating devices of their own, especially for manipulating a pallet. The stacker crane systems are controlled automatically by methods known as such by means of a control program stored in the control means, in which control program the necessary information for example on the pieces to be manipulated, the storage locations and the desired transfers is entered.

To increase the utilization degree of the stacker crane system and the manipulating devices, stacker cranes have been developed for manipulating two detached loads simultaneously. The stacker crane can thus be used, for example, to discharge one pallet from the manipulating device and to place a new pallet almost immediately in the manipulating device.

US 4,003,296 discloses one system using a stacker crane and presenting *e.g.* telescopic forks. It is also known to use adjustable forks and to take several separate loads in an integrated lifting carriage, as presented in JP 2000-255708. Publications DE 19614660 A1 and EP 1 193 194 A1 disclose structural arrangements relating to stacker cranes, which also apply the synchronized use of motors connected to the frame structure.

The stacker crane may also comprise two independently movable lifting carriages placed in respective masts, as presented in EP 0 499 251 B1. The operation of the lifting carriages is coordinated in the case that loads are transferred from one lifting carriage to another.

in the manipulating of long goods, such as pipes or beams, the dimensions of the lifting carriage and the forks are increased to keep the load in balance and to give it a sufficient support. Thus, the problem is that the rack spaces must be constructed to be sufficiently wide to receive, for example, the moving forks with enlarged width and the lifting carriages. Above all, the rack spaces must be dimensioned according to the maximum length of the pieces.

Naturally, it is possible to arrange rack spaces of different widths for pieces of different lengths, but the length distribution of the pieces cannot always be known in advance. Furthermore, the width of the rack space must be sufficient, particularly if, for example, the width of the lifting fork cannot be changed. This will often result in a decrease in the capacity of the rack, wherein in a storage of goods of long dimensions, it is not reasonable to store, for example, smaller cases, and it is not necessarily efficient to manipulate them by stacker cranes designed for the manipulation of goods of long dimensions. Merely the large size of the stacker cranes defines areas in the storage which are unaccessible to forks. However, case goods of smaller dimensions would fit in these areas, wherein the capacity of the rack system is always underutilized.

It is an aim of the present invention to eliminate the above-presented problems and to make it possible to increase the capacity of the rack system and to use the stacker cranes in a significantly more efficient way. Above all, the system is designed so that the most suitable stacker crane equipment is always in use, wherein e.g. during the manipulation of cases or goods of short dimensions, the capacity can be increased from that of prior art, and the size or weight of the equipment will not be an obstacle. Thanks to the lighter equipment, more storage space is obtained in the ends of the racks, and moreover, the upper and lower spaces required by the equipment are smaller.

To achieve this aim, the system according to the invention is primarily characterized in what will be presented in the independent claim 1. The method according to the invention, in turn, is primarily characterized in what will be presented in the independent claim 9.

The other, dependent claims will present some advantageous embodiments of the invention.

The basic idea is to use two or even more separate stacker cranes for distinct functions, wherein they can each be used alone for manipulating e.g. goods of short dimensions (or light weight). On the other hand, in the case of goods of *e.g.* long dimensions (or heavy weight), the functions of two or more stacker cranes are synchronized, wherein they cooperate in the manner of one heavier stacker crane. Thanks to the invention, it is possible to increase the capacity of the racks. For manipulating goods of lighter weight and shorter dimensions, it is not necessary to use bulky equipment, but it will suffice to take a combination of stacker cranes into use.

Furthermore, one stacker crane can move in narrower places than, for example, the combination of two stacker cranes or one heavier crane. As the stacker cranes operate separately and independently, they can be used to collect and store goods independently, which increases the efficiency of the storage.

The stacker cranes can either operate in the same aisle, or they can be arranged so that, for the time of manipulating goods of long dimensions, the crane from one aisle moves to another aisle where one stacker crane is already placed and where the goods of longer dimensions or heavier weight are to be manipulated. In the aisle, there may a single driving rail or the like to be shared by both stacker cranes. In one embodiment of the invention, the aisle comprises two parallel driving rails, wherein the stacker cranes can pass each other and each stacker crane can operate in the range of the whole rack system, if necessary.

Thanks to the invention, the need to build different types of warehouses or storage areas is reduced, and furthermore, the system can be easily expanded for different types of goods, because at least with respect to its frame, the same stacker crane type is suitable for all these goods.

A significant advantage is flexibility, wherein large loads can be manipulated relatively steadily, but smaller loads can also be manipulated fast and efficiently. Large loads refer to not only the weight of the load but also the physical dimensions of the load (length, width and height). The maximum load of a single stacker crane can be, for example, 1500 kg, wherein two stacker cranes together can manipulate a load of 3000 kg.

By means of the invention, it is possible to manipulate loads which cannot be manipulated by a single stacker crane alone. Thus, reference is particularly made to a load which is different from the normal, which is larger or heavier than the load intended for a single stacker crane, or which has such a shape, weight or size that it cannot be manipulated by a single stacker crane alone.

In the following, the invention will be described in more detail with reference to the appended drawings, in which:
- Fig. 1: shows the principle of a system of two stacker cranes, wherein they operate in a coordinated manner and manipulate the same load simultaneously,
- Fig. 2: shows the principle of a system of two stacker cranes, wherein they operate independently and manipulate different loads separately, and
- Fig. 3: also shows two stacker cranes which manipulate a shared load simultaneously.

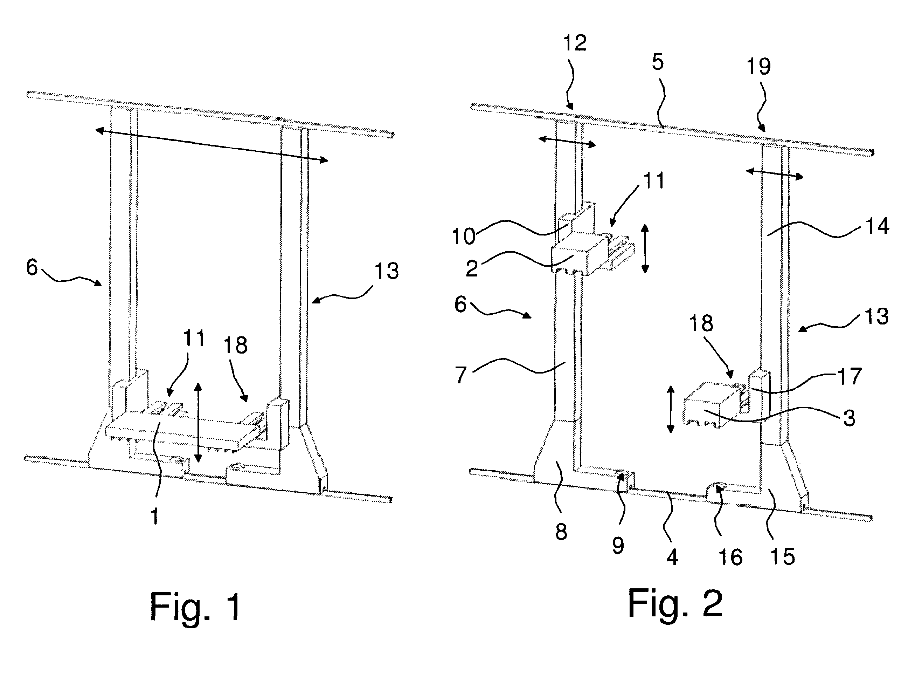

The stacker cranes 6 and 13 shown in Figs. 1 and 2 move in a way known as such, either at one set of racks or in an aisle formed between two sets of racks. The structure of the storage racks can be implemented and dimensioned in a variety of ways which are known as such from the design of warehouses for goods of both short and long dimensions. The stacker crane 6 or the stacker crane 13, or both of them, can also operate in different aisles in the way shown in Fig. 2, but one of them, or both of them, move into the same aisle or next to the same rack to operate in the way shown in Fig. 1. The aisles and the storage racks are parallel to a driving rail 4 and extend almost to the level of a guide rail 5, being distributed in several vertical rows and normally also several horizontal rows.

In this case, the stacker cranes of Fig. 2 are of the same type; the only difference may be whether the forks move in both directions or in a given direction. Stacker cranes of different types are also suitable for the use according to Fig. 1, as long as they can carry a load 1 simultaneously. The frame 17 may be, for example, a beam structure with the necessary guides, to which a lifting carriage is connected in a way known as such so that it can move up and down. In this case, the beam structure 7 or 14 is connected on top of a driving carriage 8 or 15 which, in turn, transfers the whole stacker crane 6 or 13 back and forth along the rail 4. The movement in the direction of the aisle can also be effected by wheels. The driving carriage also drives the crane under control to a given place, at a given speed, and by a given method.

The driving carriage is provided with, for example, the necessary sets of wheels 9 or 16, by which it moves on the support of the rail 4, and the upper end of the boom 7 or 14 is, in turn, equipped with wheels or other means 12 or 19 which are supported by the guide rail 5 and keep the stacker crane upright. The rail 4 can also be replaced by two rails or another arrangement, on whose support the stacker crane moves along a given path; in this case, the type of the means 9 and 16 varies as well. The lifting carriages are typically moved by means of electrical engines, their controls and a chain traction. The electric engines and their controls are also used for moving the whole stacker crane. The electricity and the control signals are supplied to the stacker crane from the outside, for example from a control system.

Each stacker crane 6 and 13 comprises a microprocessor based control, known as such, which typically operates under another shared, superior process control system. The controls of the engines, in turn, receive their control commands from the control, and they are typically also provided with a sensor system by means of which the lifting carriage can be driven to a given position. Furthermore, the system may comprise other position sensors which are connected to the control and which are used to monitor the position of the stacker crane and the driving carriage therein.

In the embodiment of Figs. 1 and 2, the lifting carriages 10 and 17 are equipped with lifting and transfer devices or load manipulating devices 11 and 18 which are of the fork type and which can be used to transfer the load from the rack to the lifting carriage and *vice versa*

In the embodiment of Fig. 2, each stacker crane 6 and 13 manipulates the respective load 2 or 3, wherein the stacker cranes are moved according to separate instructions, as long as it is ensured that the stacker cranes do not collide. They can, for example, take care of their own rack halves each, and deliver or receive goods via separate conveyors. According to one embodi ment, they operate in different aisles, wherein they are only driven to the same aisle for the cooperation according to Fig. 1.

In the embodiment of Fig. 1, the stacker cranes 6 and 13 manipulate the same long load 1 which is longer than the short loads 2 or 3. This load is, for example, a pallet or a platform with pipes or steel beams. It is also possible that the load 1 is not too large in size but it is too heavy to be manipulated by one stacker crane 6 or 13 alone. The load may also have such a shape hat its manipulation with one stacker crane is difficult or impossible but is possible with two stacker cranes. For this purpose, the stacker cranes have been driven to a predetermined distance from each other, the lifting carriages 10, 17 and/or forks 11, 18 have been moved onto the same level, and the stacker cranes have been instructed to perform the transfer movements of the driving carriages and the lifting carriages simultaneously and in the same phase, wherein even goods of longer dimensions will not fall off the forks. In this case, also when manipulating goods of long dimensions, the forks and the load 1 can be pulled onto the lifting carriages, but the goods can also be manipulated and transferred in the direction of the rail 4 in such a way that they are constantly in the protruding position shown in Fig. 1. The forks may possibly move onto either side of the lifting carriage, but alternatively, they only operate on one side of the lifting carriage.

Also, the load 1 may comprise one or two pallets, transfer bases or platforms. In the case of two different platforms, the ends of the goods with long dimensions rest on different platforms and each platform is placed on a different fork. The platform may also be long and extend from one lifting carriage to the other. When the goods are placed on top of two smaller platforms, long platforms are not needed and the same smaller platforms can also be used for the manipulation and storage of cases or other goods of shorter dimensions.

Because the di stance between the stacker cranes 6 and 13 is adjustable, even goods of long dimensions can be placed onto the lifting carriages 10 and 17, so that the racks can be placed more densely, there is no need to waste floor space for those locations where long goods are transported with the forks extended, or to complicate the independent operation of the stacker cranes shown in Fig. 2.

According to one embodiment, one stacker crane is used as a so-called master stacker crane, wherein the other, so-called slave stacker crane operates under its control. This is thus a question of synchronizing the controls and particularly the operation of the engines, whose implementation on the basis of this description will be obvious for a person skilled in the art. It is thus possible to apply an engine technology which is known from other fields of engineering and which implements the master/slave technology for the coordination of simultaneous movements. The driving of the stacker cranes to a given initial position and at a given distance can be implemented on the basis of known technology, because the position of the stacker crane is monitored even at present. The operation of the independent or synchronized stacker cranes is started by, for example, a process control system or even the control of the stacker crane itself, after receiving e.g. information about the type of the load to be manipulated, that is, whether it is of a long or a short type, or about e.g. the length category.

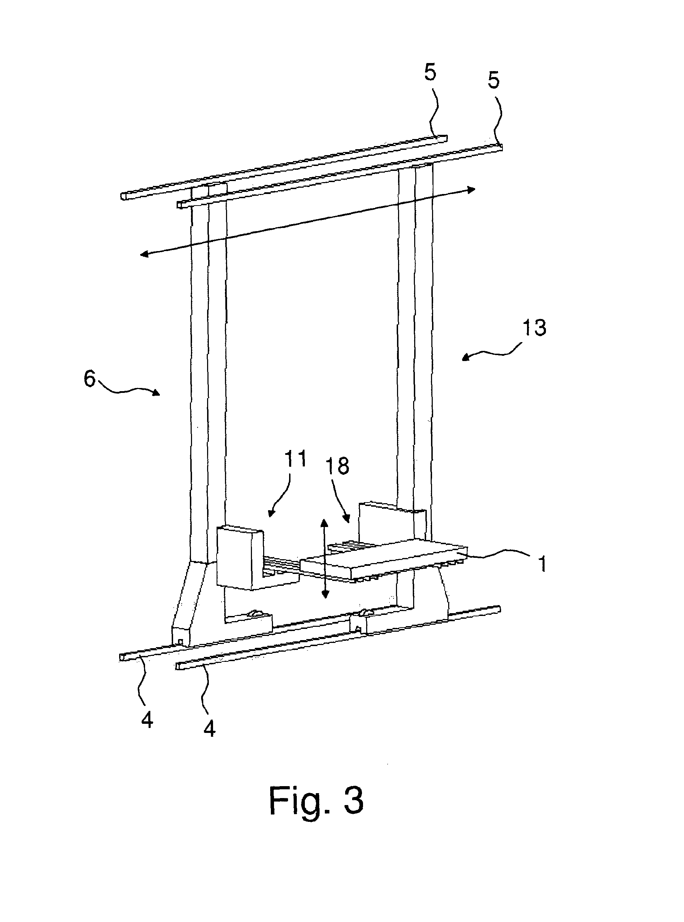

Furthermore, Fig. 3 shows an embodiment in which the stacker cranes 6 and 13 are each placed on the support of a separate driving rail 4 or a corresponding arrangement, wherein two guide rails 5 may also be needed. The situation of Fig. 3 corresponds to the situation of Fig. 1, but the second stacker crane 6 is equipped with forks 11 with a longer travel, because the stacker crane in question is farther away from the rack. By providing also the stacker crane 13 with a fork of a long travel or a corresponding load manipulating device 18, it is possible to transfer loads 1 to racks which are on both sides of the aisle and the stacker cranes. When operating independently, the stacker cranes of Fig. 3 can pass each other, wherein they can operate on the whole length of the aisle and the rack system, being in charge of either both sets of racks or only that set of racks which is on the same side of the aisle as the stacker crane in question. The operation is thus very flexible.

The invention is not limited solely to the embodiment shown in the above example. The embodiments of the invention may freely vary within the scope of the inventive features described in the following claims.

## Claims

1. A system which comprises two or more stacker cranes (6, 13) which are each intended to independently transfer at least one load (2, 3), comprising a horizontally movable driving carriage (8, 15) and a lifting carriage (10, 17) arranged therein and intended for the manipulation and vertical transfer of said load, **characterized in that** said at least two stacker cranes (6, 13) are arranged, if necessary, to move into such a relative position and to perform the movements of the driving carriages (8, 15) and the lifting carriages (10, 17) in a synchronized manner, in which it is possible to manipulate and transfer a load (1) resting on the support of both titling carriages (10, 17) simultaneously.

2. The system according to claim 1, **characterized in that** the two stacker cranes (6, 13) and their lifting carriages (10, 17) are placed in such a way that said load (1) can be placed therebetween, on the support of said lifting carriages.

3. The system according to claim 1 or 2, **characterized in that** each lifting carriage (10, 17) is equipped with a telescopic fork (10, 18) which is intended to move the load (2, 3) to and from a set of racks, wherein the telescopic forks of said two lifting carriages are arranged to perform the movements in a synchronized manner during the manipulation of the load (1) on the support of both lifting carriages (10, 17).

4. The system according to any of the claims 1 to 3, **characterized in that** said stacker cranes (6, 13) are placed in the same aisle of racks or in different aisles, wherein for coordinated operation, they are arranged to move into the same aisle of racks.

5. The system according to any of the claims 1 to 4, **characterized in that** said stacker cranes (6, 13) comprise a common driving rail (4) placed in the aisle of racks, or that each stacker crane (6, 13) comprises a separate driving rail (4) placed in the aisle of racks in such a way that said stacker cranes can pass each other.

6. The system according to any of the claims 1 to 5, **characterized in that** said load (1) is arranged to rest on top of two separate transfer platforms positioned in different lifting carriages (10, 17).

7. The system according to any of the claims 1 to 6, **characterized in that** the stacker crane which is a so-called slave stacker crane, is arranged to operate under the control of a so-called master stacker crane.

8. The system according to any of the claims 1 to 7, **characterized in that** said load (1) is larger in size or heavier than a load (2, 3) which can be manipulated by one stacker crane (6, 13) alone, or that said load (1) has such a shape that its manipulation by two stacker cranes (6, 13) is most convenient.

9. A method in the control of a stacker crane system, which system comprises two or more stacker cranes (6, 13) which are each intended to transfer at least one load (2, 3) independently, comprising a horizontally movable driving carriage (8, 15) and a lifting carriage (10, 17) arranged therein and intended for the manipulation and vertical transfer of said load, **characterized by** controlling said at least two stacker cranes (6, 13) to move, if necessary, into a predetermined relative position and to perform the movements of the driving carriages (8, 15) and the lifting carriages (10, 17) in a synchronized manner to manipulate and transfer a load (1) resting on the support of both lifting carriages (10, 17) simultaneously.

10. The method according to claim 9, **characterized by**, when each lifting carriage (10, 17) comprises a telescopic fork (11, 18) intended to transfer loads (2, 3) to and from a set of racks, synchronizing the telescopic forks of said two lifting carriages when said load (1) is being manipulated.

11. The method according to claim 9 or 10, **characterized by**, for coordinated operation, moving two stacker cranes (6, 13) placed in different aisles of racks into the same aisle of racks.

12. The method according to any of the claims 9 to 11, **characterized by** controlling one stacker crane to operate as a so-called master stacker crane, wherein the other stacker crane is controlled to operate as a so-called slave stacker crane under its control.
